# FASCICULE DE BREVET EUROPEEN

(11) **EP 3 166 460 B1**
(45) Date de publication et mention de la délivrance du brevet: **16.05.2018**
(21) Numéro de dépôt: 15742377.3
(22) Date de dépôt: 06.07.2015
(51) Int. Cl.: A47J 36/02, C01G 49/00, C23C 18/12, G01K 11/14

(54) **REVÊTEMENT ANTIADHÉSIF COMPRENANT AU MOINS UNE COUCHE DE DÉCOR FONCTIONNEL ET ARTICLE MUNI D'UN TEL REVÊTEMENT**
ANTIHAFTBESCHICHTUNG MIT MINDESTENS EINER FUNKTIONELLEN DEKORSCHICHT UND ARTIKEL MIT SOLCH EINER BESCHICHTUNG
ANTI-ADHESIVE COATING COMPRISING AT LEAST ONE FUNCTIONAL DECORATIVE LAYER AND ITEM PROVIDED WITH SUCH A COATING

(30) Priorité: 08.07.2014 FR 1456590
(43) Date de publication de la demande: 17.05.2017
(73) Titulaire: SEB S.A., 69130 Ecully (FR)
(72) Inventeur: LE BRIS, Stéphanie, 73000 Chambery (FR); PERILLON, Jean-Luc, 26130 Saint Paul Trois Chateaux (FR); WAKU, Jean, 73000 Chambery (FR); SERIER-BRAULT, Hélène, 44700 Orvault (FR); JOBIC, Stéphane, 44340 Bouguenais (FR)
(74) Mandataire: Rivière, Sophie
(86) Numéro de dépôt international: PCT/FR2015/051868
(87) Numéro de publication internationale: WO 2016/005694

(56) Documents cités:
- FR-A1- 2 784 459
- FR-A5- 2 038 681
- HÉLÈNE SERIER-BRAULT ET AL: "Thermochromism in Yttrium Iron Garnet Compounds", INORGANIC CHEMISTRY, vol. 53, no. 23, 1 décembre 2014 (2014-12-01), pages 12378-12383, XP055173879, ISSN: 0020-1669, DOI: 10.1021/ic501708b
- SZTANISZLAV A ET AL: "Investigation of garnet formation by sintering of Y2O3 and Fe2O3", JOURNAL OF MAGNETISM AND MAGNETIC MATERIALS, ELSEVIER SCIENCE PUBLISHERS, AMSTERDAM, NL, vol. 41, no. 1-3, 1 février 1984 (1984-02-01), pages 75-78, XP024452927, ISSN: 0304-8853, DOI: 10.1016/0304-8853(84)90141-0 [extrait le 1984-02-01]
- VAQUEIRO P ET AL: "INFLUENCE OF COMPLEXING AGENTS AND PH ON YTTRIUM-IRON GARNET SYNTHESIZED BY THE SOL-GEL METHOD", CHEMISTRY OF MATERIALS, AMERICAN CHEMICAL SOCIETY, US, vol. 9, no. 12, 1 décembre 1997 (1997-12-01), pages 2836-2841, XP000729212, ISSN: 0897-4756, DOI: 10.1021/CM970165F

## Description

La présente invention concerne de manière générale des revêtements antiadhésifs comprenant au moins une couche de décor fonctionnel, ainsi que des articles comportant de tels revêtements.

Par décor fonctionnel, on entend, au sens de la présente invention, un décor permettant de guider l'utilisateur de l'article dans son utilisation.

Le domaine visé est en premier lieu celui des articles culinaires, mais la présente invention peut également concerner tout autre type de surfaces, telles que la semelle d'un fer à repasser, les plaques d'un fer à lisser, ou encore le capot d'un appareil ménager.

A titre d'exemples d'articles culinaires utilisables dans le cadre de la présente invention, on peut notamment citer les poêles, les sauteuses, les casseroles, les woks, les crêpières, les faitouts, les marmites, les cocottes, les rôtissoires à oeufs et les poêles grill.

Il est primordial pour un utilisateur de tels articles de pouvoir visualiser l'évolution de la température d'un article en cours d'utilisation lorsque ce dernier est soumis à un chauffage. Dans le cas d'un article culinaire, un bon contrôle de la température lors de la cuisson des aliments est nécessaire pour des raisons sanitaires et gustatives (par exemple, pour saisir un steak sur un grill ou dans une poêle), mais également pour limiter les surchauffes ponctuelles fragilisant le revêtement de l'article culinaire. Un matériel moins surchauffé aura une durée de vie plus longue. Des aliments cuits à plus basse température possèderont des caractéristiques organoleptiques plus saines. De plus, une cuisson réalisée à la température juste nécessaire permet de limiter l'apport d'énergie et donc l'impact environnemental.

On connaît le document brevet FR 1388029, qui décrit un ustensile de cuisson muni d'un indicateur thermique constitué d'un corps thermosensible changeant de couleur en fonction de la température de manière réversible, cet indicateur thermique étant formulé dans un revêtement antiadhésif, notamment constitué de polytétrafluoroéthylène (PTFE). Un pigment thermostable (c'est-à-dire un composé minéral ou organique qui présente un très faible changement de teinte, voire pas de changement de teinte, lorsqu'il est soumis à une élévation de température dans un domaine de température donné) peut également être incorporé à l'ustensile de cuisson à titre de témoin pour permettre une appréciation du changement relatif de couleur de l'indicateur thermique, et donc du changement de température. Toutefois, la simple association d'un pigment thermostable et d'un pigment thermosensible ne permet pas de distinguer de façon nette le changement de température.

Pour remédier à ces problèmes, il a ensuite été développé un indicateur thermique à base de pigments thermochromes, décrit dans le document brevet EP 1121576. Cet indicateur thermique est un décor comportant au moins deux motifs, l'un à base d'un pigment thermochrome de type oxyde de fer fonçant avec la montée en température, l'autre à base d'un pigment thermochrome s'éclaircissant très légèrement avec la montée en température comportant un mélange de rouge de perylène et de noir spinelle. Il s'ensuit qu'à une température préétablie (que l'on peut régler entre 160°C et 220°C) on obtient une confusion des couleurs des deux motifs ce qui est un moyen d'identifier cette température préétablie.

L'utilisation simultanée de ces pigments thermochromes dans des zones contiguës d'un décor permet effectivement d'améliorer la perception visuelle du changement de température de la surface de cuisson de l'article chauffant. Toutefois, ce type d'indicateur thermique reste difficilement compréhensible au premier abord pour l'utilisateur car les deux zones présentent chacune une couleur rouge ayant une valeur chromatique proche l'une de l'autre à température ambiante. Par ailleurs, la confusion des couleurs des motifs se produit dans une zone d'amplitude thermique d'au moins 50°C. Il s'ensuit que l'appréciation du changement de température et le confort de la lecture ne sont pas faciles, en particulier pour un public sans formation particulière. De ce fait, les utilisateurs ont alors tendance à négliger l'information apportée par cet indicateur thermique.

Il y a donc un intérêt à ce que l'on puisse proposer un indicateur thermique qui change franchement de couleur et/ou de propriété optique, lors d'une variation de température, en présentant par exemple des couleurs franchement différentes dans le cas d'un indicateur thermique coloré (par exemple, passage du vert au rouge).

Des pigments de ce type ont fait l'objet du document brevet FR 2891844 dans lequel des oxydes de CuMoW présentaient des changements de couleur réversibles sous l'effet d'une variation de température et/ou sous l'effet d'une contrainte mécanique, par exemple une pression d'au moins 105 Pa. Toutefois, ces oxydes pour lesquels la variation de couleur est la conséquence d'un changement de phase sont particulièrement sensibles à la cyclabilité. C'est ainsi qu'après cinq cycles au plus, on n'arrive plus à retrouver la phase alpha métastable responsable de la coloration verte à basse température. L'intérêt d'un tel pigment à titre d'indicateur thermique coloré est donc nul dans la pratique pour servir pour des usages répétés tels que la cuisson des aliments.

Afin de remédier aux problèmes des revêtements fonctionnels connus de l'art antérieur, la présente invention vise à proposer à l'utilisateur un revêtement antiadhésif comprenant au moins une couche de décor fonctionnel permettant d'accompagner et de guider l'utilisateur de l'article sur lequel le revêtement en question est déposé.

Plus particulièrement, la présente invention a pour objet un revêtement antiadhésif comprenant au moins une couche de décor fonctionnel,
caractérisé en ce que la couche de décor comprend une composition pigmentaire présentant une variation réversible de propriétés optiques et/ou colorimétriques lorsque le revêtement est soumis, en partie ou en totalité, à une variation de température entre une température froide et une température chaude, la température froide étant comprise entre 0°C et 40°C et la température chaude étant comprise entre 80°C et 400°C, et
en ce que la composition pigmentaire comprend au moins un composé de formule (I) se présentant sous forme de particules :

(I) Y₍₃₋ₓ₎MₓFe_{(5-y)}Q_{y}O₁₂

dans laquelle :
- M: est choisi dans le groupe constitué par les lanthanides, les métaux alcalins, les métaux alcalino-terreux et les métalloïdes au degré d'oxydation +3 ;
- Q: est choisi dans le groupe constitué par les lanthanides, les non-métaux au degré d'oxydation +4, les métaux au degré d'oxydation +3 ou +4, les métaux de transition au degré d'oxydation +2 ou +4, les métaux alcalino-terreux et les métaux alcalins ;
- x: est compris entre 0 et 0,3 ; et
- y: est compris entre 0 et 3.

De manière avantageuse, M peut être choisi dans le groupe constitué par La, Ce, Ca, et Sr, ainsi que leurs combinaisons, et Q est choisi dans le groupe constitué par Si, Al, Ga, Ge, Ti, Cr, Ca, Sr et La, ainsi que leurs combinaisons.

De manière avantageuse, le composé de formule (I) peut présenter une structure de type grenat.

Par composé ayant une structure grenat, on entend, au sens de la présente invention, un composé de formule générale X₃T₂K₃O₁₂ construite à partir de cations X, T et K qui occupent respectivement des sites de coordinence 12, 6 (coordination octaédrique), et 4 (coordination tétraédrique) :
- X : éléments de transition bivalents entourés de 8 atomes d'oxygène,
- T : éléments de transition trivalents entourés de 6 atomes d'oxygène, en coordination octaédrique, et
- K : troisième groupe constitutif, entouré de 4 atomes d'oxygène, en coordination tétraédrique.

Les éléments localisés sur ces différents sites peuvent être de nature chimique très dissemblables avec des degrés d'oxydation (DO) différents d'une phase à l'autre, l'équilibre des charges devant évidemment toujours être respecté. Ainsi, le cation X peut aussi bien être un alcalino-terreux, voire un métal de transition au DO +2, qu'une Terre Rare au DO +3, voire +2 ou +4. Le cation T sera classiquement un métal de transition ou un métalloïde au DO +3, alors que le cation K sera préférentiellement un métalloïde ou un métal de transition de DO +3 ou +4 (par exemple Fe³⁺, Ti⁴⁺...) . Il apparaît donc que cette structure grenat est d'une souplesse exemplaire permettant de nombreuses substitutions et donc une forte modulation des propriétés physiques.

Par exemple, dans le cas du grenat yttrium fer de formule Y₃Fe₅O₁₂, chaque octaèdre de fer est entouré de 6 tétraèdres de fer et de 6 atomes d'yttrium, chaque tétraèdre de fer est entouré de 4 octaèdres de fer et de 6 atomes d'yttrium, et enfin chaque atome d'yttrium est entouré de 4 octaèdres de fer et de 4 tétraèdres de fer.

Les composés de formule (I) de structure de type grenat présentent des propriétés thermochromes continues et une variation franche de couleur, avantageusement une variation de couleur du vert au rouge, entre une température froide et une température chaude, la température froide étant comprise entre 0°C et 40°C et la température chaude étant comprise entre 80°C et 400°C. Ces composés de structure grenat offrent beaucoup de souplesse car il est possible de substituer facilement tout ou partie des atomes de fer ou d'yttrium pour modifier le composé (cristal), et par là même ses propriétés colorimétriques. Ces composés présentent en outre d'excellentes propriétés de résistance thermique et chimique.

De manière avantageuse, le composé de formule (I) peut être choisi parmi les composés suivants :
Y₃Fe₅O₁₂,
Y₃Fe_{4,75}Ga_{0,25}O₁₂
Y_{2,85}La_{0,15}Fe₅O₁₂,
Y_{2,75}Sr_{0,25}Fe_{4,75}Ge_{0,25}O₁₂,
Y_{2,9}Sr_{0,1}Fe_{4,9}Ge_{0,1}O₁₂,
Y_{2,75}Sr_{0,25}Fe_{4,75}Si_{0,25}O₁₂,
Y_{2,9}Sr_{0,1}Fe_{4,9}Si_{0,1}O₁₂,
Y_{2,9}Sr_{0,1}Fe_{4,9}Ti_{0,1}O₁₂,
Y_{2,85}Sr_{0,15}Fe_{4,85}Ti_{0,15}O₁₂,
Y_{2,75}Ca_{0,25}Fe_{4,75}Ge_{0,25}O₁₂,
Y_{2,75}Ca_{0,25}Fe_{4,75}Si_{0,25}O₁₂,
Y₃Fe_{4,5}Al_{0,5}O₁₂,
Y₃Fe_{4,75}Al_{0,25}O₁₂,
Y₃Fe_{4,4}Al_{0,5}Cr_{0,1}O₁₂,
Y₃Fe_{4,65}Al_{0,25}Cr_{0,1}O₁₂,
Y₃Fe_{4,75}Ge_{0,25}O₁₂,
Y₃Fe_{4,75}Si_{0,25}O₁₂,
Y₃Fe_{4,85}Cr_{0,15}O₁₂,
Y₃Fe₃Al₂O₁₂,
Y₃Al₃Fe₂O₁₂.

De manière avantageuse, le composé de formule (I) peut être tel que y est compris entre 0 et 0,5.

La couche de décor du revêtement antiadhésif selon l'invention comprend une composition pigmentaire présentant une variation réversible de propriétés optiques et/ou colorimétriques lorsque le revêtement est soumis, en partie ou en totalité, à une variation de température entre une température froide (comprise entre 0°C et 40°C) et une température chaude (comprise entre 80°C et 400°C).

De manière avantageuse, cette température chaude peut être comprise entre 120°C et 240°C.

Selon un premier mode de réalisation du revêtement antiadhésif selon l'invention, la couche de décor peut être exempte de liant thermostable.

Selon un deuxième mode de réalisation du revêtement antiadhésif selon l'invention, la couche de décor peut comprendre, outre la composition pigmentaire, au moins un liant thermostable.

Ce liant thermostable peut être choisi dans le groupe constitué par les émaux, les résines fluorocarbonées (seules ou en mélange), les polymères inorganiques ou hybrides organiques-inorganiques synthétisés par voie sol-gel, les silicones, les silicone-polyesters, les polyimides, le polysulfure de phényle (PPS), le polysulfure d'éthylène (PES), les polyétheréthercétones (PEEK), les polyéthercétones (PEK), les polyamide-imides (PAI), les fluorosilicones, et les polybenzimidazoles (PBI), ainsi que leurs mélanges.

De manière avantageuse, la couche de décor du revêtement antiadhésif selon l'invention, peut comprendre au moins une zone dans laquelle les particules de composé de formule (I) sont de forme anisotrope et sont majoritairement inclinées d'un angle α compris entre 20° et 90° par rapport au plan moyen de la couche de décor.

Dans cette zone où les particules sont inclinées par rapport au plan moyen de la couche de décor, on observe que la réflectivité est moindre que celle observée à la surface du reste du décor (là où les particules sont essentiellement horizontales).

Par particules de forme anisotrope, on entend au sens de la présente invention des particules dont les dimensions caractéristiques ne sont pas identiques dans toutes les directions, comme par exemples des fibres (de forme essentiellement unidimensionnelle) ou des paillettes (de forme essentiellement bidimensionnelle ou plate).

Une telle orientation des particules anisotropes peut être obtenue de différentes manières, en fonction du type des particules anisotropes utilisées.

Ainsi, dans le cas de particules aptes à être orientées par un moyen mécanique (comme les fibres), l'orientation essentiellement perpendiculaire à la couche de revêtement peut par exemple résulter d'un positionnement lié au procédé d'application du revêtement, comme par exemple l'orientation au travers d'un applicateur monodirectionnel comme une microbuse.

Dans le cas de particules aptes à être orientées par un moyen physique (par exemple électrique ou magnétique), l'orientation essentiellement perpendiculaire des particules anisotropes par rapport à la couche de revêtement peut résulter d'un positionnement consécutif ou simultané à l'application du revêtement, comme par exemple l'orientation de particules magnétisables sous l'effet d'un champ magnétique ou de particules électrisables sous l'effet d'un champ électrique.

De manière avantageuse, plus de 66%, et de préférence plus de 80%, desdites particules de forme anisotrope peuvent être inclinées d'un angle α compris entre 20° et 90° par rapport au plan moyen du film.

Un taux élevé de particules inclinées d'un angle α compris entre 20° et 90° par rapport au plan moyen du film permet d'améliorer le renforcement mécanique de la couche de décor en limitant la propagation des fissures préalables à l'écaillage.

Les particules magnétisables peuvent se présenter sous différentes natures.

Elles peuvent être de nature homogène, c'est-à-dire constituées uniquement du composé de formule (I), ou de nature composite, c'est-à-dire que les particules magnétisables ont une structure coeur-enveloppe, dans laquelle le composé de formule (I) est dans le coeur et/ou dans l'enveloppe desdites particules.

Avantageusement, les particules magnétisables sont des particules composites dans lesquelles le composé de formule (I) est dans l'enveloppe desdites particules, alors que le coeur anisotrope est amagnétique, par exemple réalisé à partir de mica ou d'aluminium, magnétique ou ferromagnétique, par exemple réalisé à partir d'oxyde de fer ou d'acier inoxydable.

De manière avantageuse, le revêtement selon l'invention peut en outre comprendre au moins une sous-couche et/ou au moins une couche de finition.

De manière avantageuse, la composition pigmentaire de la couche de décor du revêtement antiadhésif selon l'invention peut comprendre en outre au moins un autre composé thermochrome, et de préférence de l'oxyde de bismuth (Bi₂O₃).

La présente invention a également pour objet un article caractérisé en ce qu'il comprend un support présentant deux faces opposées, dont l'une au moins est recouverte d'un revêtement antiadhésif selon l'invention.

En ce qui concerne la nature du support de l'article, celui-ci peut être réalisé en un matériau choisi parmi les métaux, le verre, les céramiques et les matières plastiques. On utilisera de préférence un article dont le support est un support métallique en aluminium (ou alliage d'aluminium) anodisé ou non, en aluminium (ou alliage d'aluminium) poli, brossé, microbillé, sablé, ou traité chimiquement, un support en acier inoxydable poli, brossé ou microbillé, un support en fonte, ou un support en cuivre martelé ou poli.

L'article selon l'invention pourra avantageusement être un article culinaire présentant un support avec une face intérieure concave apte à recevoir des aliments et une face extérieure convexe destinée à être disposée du côté d'une source de chaleur.

Le revêtement antiadhésif selon l'invention est présent sur l'une au moins de la face intérieure et de la face extérieure. Avantageusement, le revêtement antiadhésif selon l'invention est présent sur la face intérieure de l'article.

La présente invention a encore pour objet un premier procédé de synthèse d'un composé de formule (I) sous forme de particules par voie solide :

(I) Y₍₃₋ₓ₎MₓFe_{(5-y)}Q_{y}O₁₂,

dans laquelle :
- M: est choisi dans le groupe constitué par les lanthanides, les métaux alcalins, les métaux alcalino-terreux et les métalloïdes au degré d'oxydation +3 ;
- Q: est choisi dans le groupe constitué par les lanthanides, les non-métaux au degré d'oxydation +4, les métaux au degré d'oxydation +3 ou +4, les métaux de transition au degré d'oxydation +2 ou +4, les métaux alcalino-terreux et les métaux alcalins ;
- x: varie de 0 à 0,3 ; et
- y: varie de 0 à 3 ;
le procédé comprenant les étapes suivantes :
a) cobroyage en milieu alcoolique de poudres d'oxydes des éléments constitutifs du composé de formule (I) ;
b) chauffage du produit de l'étape a) à une température comprise entre 1200°C et 1500°C pendant 4 à 10 heures ; et
c) refroidissement du produit de l'étape b) jusqu'à la température ambiante.

De manière avantageuse, le milieu alcoolique est à base d'éthanol.

La présente invention a encore pour objet un deuxième procédé de synthèse d'un composé de formule (I) sous forme de particules par voie sol-gel :

(I) Y₍₃₋ₓ₎MₓFe_{(5-y)}Q_{y}O₁₂,

dans laquelle :
- M: est choisi dans le groupe constitué par les lanthanides, les métaux alcalins, les métaux alcalino-terreux et les métalloïdes au degré d'oxydation +3 ;
- Q: est choisi dans le groupe constitué par les lanthanides, les non-métaux au degré d'oxydation +4, les métaux au degré d'oxydation +3 ou +4, les métaux de transition au degré d'oxydation +2 ou +4, les métaux alcalino-terreux et les métaux alcalins ;
- x: varie de 0 à 0,3 ; et
- y: varie de 0 à 3 ;
le procédé comprenant les étapes suivantes :
a) mélange de sels des éléments constitutifs du composé de formule (I) et d'au moins un acide organique pour former un gel ;
b) séchage du gel de l'étape a) ;
c) calcination du produit de l'étape b) à une température comprise entre 500°C et 700°C ;
d) recuit du produit de l'étape c) à une température comprise entre 800°C et 1000°C pendant au moins 4 heures ; et
e) refroidissement du produit de l'étape d) jusqu'à la température ambiante.

De manière avantageuse, on utilisera dans ce deuxième procédé de synthèse des nitrates à titre de sels.

De manière avantageuse, on utilisera dans ce deuxième procédé de synthèse de l'acide citrique à titre d'acide organique.

La présente description concerne un premier procédé de préparation d'un revêtement antiadhésif selon l'invention sur l'une au moins des faces d'un support, caractérisé en ce qu'il comprend les étapes suivantes :
a) fourniture du composé de formule (I) ;
b) réalisation de la composition pigmentaire comprenant le composé de formule (I) ;
c) réalisation d'une composition de couche de décor comprenant la composition pigmentaire et un liant thermostable ;
d) application de la composition de couche de décor sur la face du support pour former une couche de décor fonctionnel ; et
e) cuisson.

La présente description concerne un deuxième procédé de préparation d'un revêtement antiadhésif selon l'invention sur l'une au moins des faces d'un support, caractérisé en ce qu'il comprend les étapes suivantes :
a) fourniture du composé de formule (I) ;
b) réalisation de la composition pigmentaire comprenant le composé de formule (I) ;
c) réalisation d'une composition de couche de décor comprenant la composition pigmentaire ;
d) application de la composition de couche de décor sur la face du support pour former une couche de décor fonctionnel ;
e) application d'au moins une couche de finition sur la couche de décor ; et
f) cuisson.

La présente description concerne un troisième procédé de préparation d'un revêtement antiadhésif selon l'invention sur l'une au moins des faces d'un support, caractérisé en ce qu'il comprend les étapes suivantes :
a) fourniture du composé de formule (I) ;
b) réalisation de la composition pigmentaire comprenant le composé de formule (I) ;
c) réalisation d'une composition de couche de décor comprenant la composition pigmentaire ;
d) application de la composition de couche de décor sur la face du support préalablement revêtue d'au moins une sous-couche pour former une couche de décor fonctionnel ;
e) cuisson.

De manière avantageuse, ce procédé de préparation d'un revêtement antiadhésif peut avantageusement comprendre en outre l'application d'au moins une couche de finition sur la couche de décor entre les étapes d) et e).

De manière avantageuse, la composition de couche de décor comprend en outre au moins un liant thermostable.

Pour l'ensemble des procédés de préparation de revêtement antiadhésif susmentionnés, le composé de formule (I) peut avantageusement être obtenu selon l'un des procédés de synthèse de composés de formule (I).

Pour l'ensemble des procédés de préparation de revêtement antiadhésif susmentionnés, au moins une zone de la couche de décor comprend des particules de composé de formule (I) de forme anisotrope, le procédé comprenant en outre, avant l'étape de cuisson, une étape d'orientation des particules de composé de formule (I) de forme anisotrope par un moyen physique ou mécanique dans la zone.

De préférence, les particules de composé de formule (I) de forme anisotrope peuvent être magnétisables, et l'étape d'orientation des particules magnétisables peut alors être réalisée par application d'un champ magnétique ou d'un champ électrique, soit au cours de l'étape d'application de la composition de couche de décor, soit postérieurement à l'étape d'application de la composition de couche de décor et préalablement à l'étape de cuisson.

D'autres avantages et particularités de la présente invention résulteront de la description qui va suivre, donnée à titre d'exemple non limitatif et faite en référence aux figures annexées :
- la figure 1 est une vue schématique en coupe d'un exemple de réalisation d'une poêle selon l'invention ;
- la figure 2 représente une vue schématique en coupe de la poêle de la figure 1 munie d'un revêtement monocouche selon l'invention; et
- la figure 3 représente une vue schématique en coupe de la poêle de la figure 1 munie d'un revêtement multicouche antiadhésif selon l'invention.

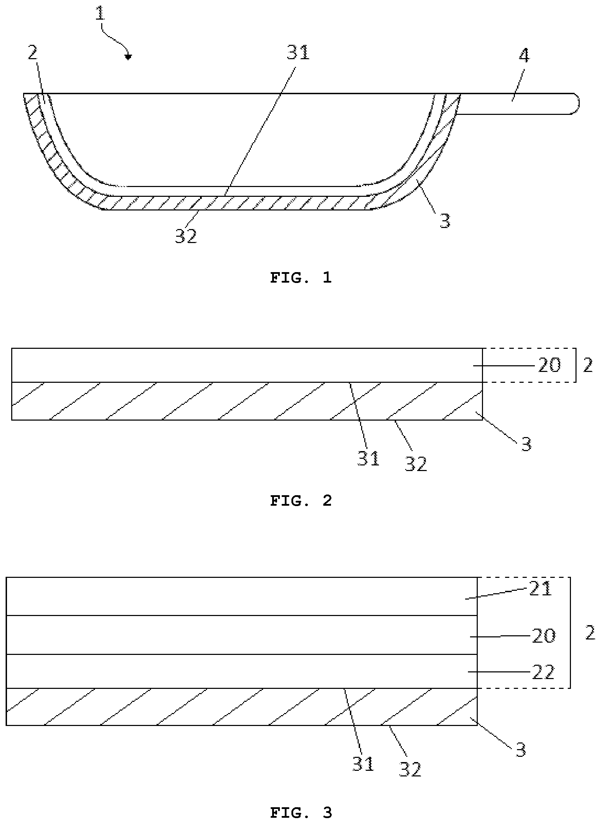

Sur la figure 1, on a représenté, à titre d'exemple d'article culinaire selon l'invention, une poêle 1 qui comprend un support 3 se présentant sous la forme d'une calotte creuse et une poignée de préhension 4. Le support 3 comprend une face intérieure 31 qui est la face orientée du côté des aliments susceptibles d'être reçus dans la poêle 1, et une face extérieure 32 qui est destinée à être disposée vers une source de chaleur extérieure. Le support 3 comprend, sur sa face intérieure 31, un revêtement antiadhésif 2 selon l'invention.

La figure 2 représente une vue schématique en coupe de la poêle de la figure 1 munie d'un revêtement antiadhésif 2 monocouche selon l'invention. Le revêtement antiadhésif 2 comprend une couche de décor 20 comprenant au moins un composé de formule (I).

La figure 3 représente une vue schématique en coupe de la poêle de la figure 1 munie d'un revêtement antiadhésif 2 multicouche selon l'invention. Le revêtement antiadhésif 2 comprend une sous-couche 22, une couche de finition 21 et une couche de décor 20 comprenant au moins un composé de formule (I).

L'invention est illustrée plus en détail dans les exemples suivants.

### EXEMPLES

### Exemple 1 : Préparation par voie solide de compositions pigmentaires (PG1 à PG16)

On introduit, dans un broyeur mécanique, les oxydes dans les proportions données dans le tableau 1 sous forme de poudre (en accord avec la stoechiométrie du composé de formule (I) souhaité) en présence d'éthanol.

Le broyage est réalisé pendant une durée dépendante de la granulométrie des poudres d'oxyde utilisées et suffisante pour obtenir une dispersion ayant une granulométrie moyenne des agrégats d'environ 2 µm.

La dispersion est versée dans un creuset, séchée pour éliminer l'éthanol puis portée à 1350°C par chauffage à une vitesse d'environ 2°C/min.

Chacune des poudres obtenues PG1 à PG16 est maintenue à 1350°C pendant 6 heures de manière à réaliser le composé de formule (I) par interdiffusion des oxydes en voie solide.

Chacune des poudres PG1 à PG16 obtenues présente une granulométrie moyenne proche de 2 µm.

La composition de chacune des poudres obtenues PG1 à PG16 est ensuite analysée par diffractométrie de rayons X (DRX) et reportée dans le tableau 1.

La teneur massique en composé de formule (I) dans chacune des poudres obtenues PG1 à PG16 est supérieure ou égale à 95%.

Ces poudres PG1 à PG16 présentent chacune une variation réversible de propriété colorimétrique indiquée dans le tableau 1.

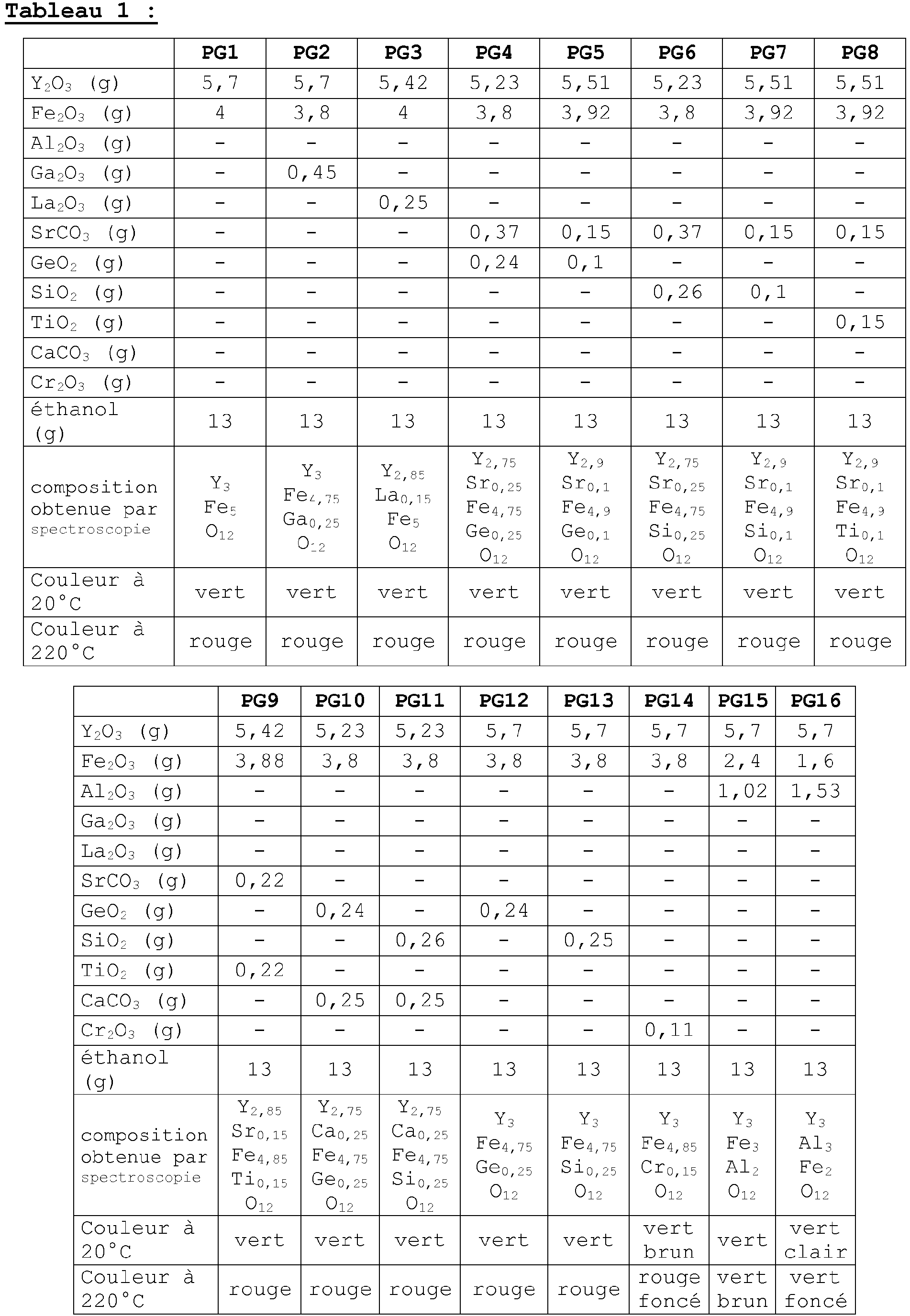

### Exemple 2 : Préparation par voie sol-gel de compositions pigmentaires (PG17 à PG20)

Une solution aqueuse est préparée par mélange de nitrates, d'eau déminéralisée et d'acide citrique, dans les proportions données dans le tableau 2 (pour les nitrates : en accord avec la stoechiométrie du composé de formule (I) souhaité).

Le pH de la solution est ajusté à 2 par ajout d'une solution d'ammoniaque à 25 %.

La solution est chauffée progressivement à 120°C pour éliminer l'eau et obtenir un gel.

Le séchage est poursuivi pendant 30 minutes pour s'assurer que la quasi-totalité de l'eau est éliminée.

Le gel est calciné à 550°C pendant une heure, puis recuit à 900°C pendant 6 heures.

Chacune des poudres obtenues PG17 à PG20 présente une granulométrie moyenne proche de 2 µm.

La composition de chacune des poudres obtenues PG17 à PG20 est analysée par diffractométrie de rayons X (DRX) et reportée dans le tableau 2 ci-après.

La teneur massique en composé de formule (I) dans chacune des poudres obtenues est supérieure ou égale à 95%.

Ces poudres PG17 à PG20 présentent chacune une variation réversible de propriété colorimétrique indiquée dans le tableau 2 ci-après.

**Tableau 2 :**

| | **PG17** | **PG18** | **PG19** | **PG20** |
|---|---|---|---|---|
| Fe (NO₃)₉H₂O (g) | 12,6 | 13,3 | 12,32 | 13,02 |
| Y(NO₃)₆H₂O (g) | 7,8 | 7,8 | 7,8 | 7,8 |
| Al(NO₃)₉H₂O (g) | 1,26 | 0,63 | 1,26 | 0,63 |
| Cr (NO₃)₉H₂O (g) | - | - | 0,28 | 0,28 |
| eau déminéralisée (g) | 216,6 | 223,6 | 216,6 | 217,3 |
| acide citrique (g) | 61,4 | 62 | 60 | 60 |
| composition obtenue par spectroscopie | Y₃Fe_{4,5} Al_{0,5}O₁₂ | Y₃Fe_{4,75} Al_{0,25}O₁₂ | Y₃Fe_{4,4}A_{1,5} Cr_{0,1}O₁₂ | Y₃Fe_{4,65}Al_{0,25} Cr_{0,1}O₁₂ |
| Couleur à 20°C | vert | vert | vert | vert |
| Couleur à 220°C | rouge | rouge | rouge | rouge |

### Exemple 3 : Préparation de compositions de couche de décor sans liant (SGD1)

Les composés suivants sont introduits dans un broyeur puis broyés et agités pour donner une composition de couche de décor.

| **composé** | **% massique** |
|---|---|
| **composition pigmentaire de l'exemple 1 ou 2** | 67,70 |
| terpinéol | 6,05 |
| propylène glycol | 6,05 |
| isopropanol | 20,20 |

### Exemple 4 : Préparation de compositions sol-gel de couche de décor (SGD2)

Les composés de la partie A sont introduits dans un broyeur, puis broyés et agités pour donner une pâte.

On réunit par simple mélange les composés de la partie B.

Sous forme séparée, les parties A et B peuvent se conserver plusieurs semaines.

Avant utilisation, on réunit les parties A et B.

On laisse maturer le mélange pendant au moins 6 heures pour donner une composition sol-gel de couche de décor. Sous cette forme, la composition sol-gel peut se conserver plusieurs jours.

| **partie** | **composé** | **% massique** |
|---|---|---|
| A | silice colloïdale à 30% | 27,41 |
| A | eau déminéralisée | 7,13 |
| A | isopropanol | 2,74 |
| A | butylglycol | 0,88 |
| A | **composition pigmentaire de l'exemple 1 ou 2** | 13,00 |
| A | alumine | 11,51 |
| B | méthyltriéthoxyéthanol | 36,16 |
| B | acide formique | 0,36 |
| B | huile de silicone 47V50 | 0,81 |

### Exemple 5 : Préparation d'une composition sol-gel de couche de surface (SGS)

Les composés de la partie A sont introduits dans un mélangeur et agités.

On procède de même pour chacune des parties B et C.

Sous forme séparée, les parties A, B et C peuvent se conserver plusieurs mois.

Avant utilisation, on réunit les parties A, B et C.

On laisse maturer le mélange pendant au moins 6 heures pour donner une composition sol-gel de couche de surface. Sous cette forme, la composition sol-gel peut se conserver plusieurs jours.

| **partie** | **composé** | **% massique** |
|---|---|---|
| A | silice colloïdale à 30% | 31,79 |
| B | eau | 8,26 |
| B | acide acétique | 1,53 |
| B | isopropanol | 3,18 |
| B | butylglycol | 3,05 |
| B | huile de silicone 47V50 | 0,87 |
| B | méthyltriéthoxysilane | 41,96 |
| C | butylglycol | 9,08 |
| C | paillettes métalliques | 0,18 |
| C | agent d'étalement | 0,10 |

### Exemple 6 : Préparation d'une composition sol-gel de couche de fond (SGF)

Les composés de la partie A sont introduits dans un broyeur puis broyés et agités pour donner une pâte.

On réunit par simple mélange les composés de la partie B. Sous forme séparée, les parties A et B peuvent se conserver plusieurs semaines.

Avant utilisation, on réunit les parties A et B.

On laisse maturer le mélange pendant au moins 6 heures pour donner une composition sol-gel de couche de fond. Sous cette forme, la composition sol-gel peut se conserver plusieurs jours.

| **partie** | **composé** | **% massique** |
|---|---|---|
| A | silice colloïdale à 30% | 27,41 |
| A | eau déminéralisée | 7,13 |
| A | isopropanol | 2,74 |
| A | butylglycol | 0,88 |
| A | noir spinelle (CuCoMn) | 0,37 |
| A | dioxyde de titane | 12,63 |
| A | alumine | 11,51 |
| B | méthyltriéthoxyéthanol | 36,16 |
| B | acide formique | 0,36 |
| B | huile de silicone 47V50 | 0,81 |

### Exemple 7 : Préparation de compositions de couche de décor sans liant (FFD1)

Les composés suivants sont introduits dans un broyeur puis broyés et agités pour donner une composition de couche de décor. Cette couche de décor peut être utilisée telle quelle et peut se conserver quelques heures.

| **composé** | **% massique** |
|---|---|
| **composition pigmentaire de l'exemple 1 ou 2** | 10,94 |
| eau déminéralisée | 24,80 |
| monopropylène glycol | 64,26 |

### Exemple 8 : Préparation de compositions fluorées de couche de décor (FFD2)

La composition est obtenue par simple mélange des différents composés. Telle quelle, la composition se conserve plusieurs jours.

| **composé** | **% massique** |
|---|---|
| dispersion aqueuse de PTFE | 70,18 |
| **composition FFD1** | 26,49 |
| agent anti-mousse | 2,22 |
| solution d'ammoniaque à 10,25 % | 1,11 |

### Exemple 9 : Préparation de compositions fluorées de couche de décor (FFD3)

La composition est obtenue par simple mélange des différents composés. Telle quelle, la composition se conserve plusieurs jours.

| **composé** | **% massique** |
|---|---|
| dispersion aqueuse de PTFE | 52,7 |
| paillettes métalliques | 0,2 |
| **composition FFD1** | 17,2 |
| silice colloïdale à 30 % | 4,3 |
| résine d'accroche PAI | 12,9 |
| dispersion aqueuse de polymère acrylique | 8,6 |
| eau déminéralisée | 4,1 |

### Exemple 10 : Préparation d'une composition fluorée de couche de fond (FFF)

La composition est obtenue par simple mélange des différents composés. Telle quelle, la composition se conserve plusieurs jours.

| **composé** | **% massique** |
|---|---|
| dispersion aqueuse de PTFE | 61,0 |
| paillettes métalliques | 0,2 |
| solution de noir de carbone à 25 % | 4,0 |
| silice colloïdale à 30 % | 5,0 |
| résine d'accroche PAI | 15,0 |
| dispersion aqueuse de polymère acrylique | 10,0 |
| eau déminéralisée | 4,8 |

### Exemple 11 : Préparation d'une composition fluorée de couche de surface (FFS)

La composition est obtenue par simple mélange des différents composés. Telle quelle, la composition se conserve plusieurs jours.

| **composé** | **% massique** |
|---|---|
| dispersion aqueuse de PTFE | 85,0 |
| paillettes métalliques | 0,2 |
| dispersion aqueuse de polymère acrylique | 10,0 |
| eau déminéralisée | 4,8 |

### Exemple 12 : Préparation d'un article incorporant une couche de décor selon l'invention

Un disque en alliage d'aluminium est dégraissé et brossé de manière à éliminer des surfaces du disque les corps gras et les oxydes de surface.

La composition fluorée de couche de décor FFD3, préparée à partir de la composition pigmentaire PG1, est appliquée sur une des surfaces du disque par sérigraphie.

Après séchage, le disque revêtu est étuvé à 415°C pendant 7 minutes pour obtenir un disque comprenant un revêtement antiadhésif fluoré monocouche.

Le disque est ensuite embouti pour donner une calotte revêtue sur sa surface intérieure.

Le revêtement obtenu présente une couleur vert à température ambiante (20°C).

La calotte revêtue est chauffée jusqu'à 220°C : une variation progressive de la couleur du revêtement, de la couleur verte initiale à une couleur rouge, est observée pendant le chauffage.

On laisse refroidir la calotte jusqu'à la température ambiante : une variation progressive de la couleur du revêtement, de la couleur rouge à la couleur verte initiale, est observée pendant le refroidissement.

On réalise 10 cycles successifs de chauffage et de refroidissement tels que décrits ci-dessus : le revêtement présente les mêmes variations de propriété colorimétrique à chaque fois.

### Exemple 13 : Préparation d'un article incorporant une couche de décor selon l'invention

Un disque en alliage d'aluminium est dégraissé et brossé de manière à éliminer des surfaces du disque les corps gras et les oxydes de surface.

La composition fluorée de couche de fond FFF est appliquée sur une des surfaces du disque par sérigraphie puis séchée.

La composition fluorée de couche de décor FFD1, préparée à partir de la composition pigmentaire PG15, est appliquée par tampographie sur une partie (empreinte circulaire de 50 mm de diamètre) de la surface du disque revêtue de la couche de fond. La couche de décor est ensuite séchée.

La composition fluorée de couche de surface FFS est ensuite appliquée par sérigraphie sur la surface du disque revêtue de la couche de fond et de la couche de décor, puis séchée.

Le disque revêtu est étuvé à 415°C pendant 7 minutes pour obtenir un disque comprenant un revêtement antiadhésif fluoré multicouche. Le disque est ensuite embouti pour donner une calotte revêtue sur sa surface intérieure.

Le revêtement obtenu présente un décor de couleur verte à température ambiante (20°C) sur fond noir (correspondant à la couche de fond).

La calotte revêtue est chauffée jusqu'à 220°C : une variation progressive de la couleur du décor, de la couleur verte initiale à une couleur vert brun, est observée pendant le chauffage, les propriétés colorimétriques du fond noir ne variant pas.

On laisse refroidir la calotte jusqu'à la température ambiante : une variation progressive de la couleur du décor, de la couleur vert brun à la couleur vert initiale, est observée pendant le refroidissement, les propriétés colorimétriques du fond noir ne variant pas.

On réalise 10 cycles successifs de chauffage et de refroidissement tels que décrits ci-dessus : le décor présente les mêmes variations de propriété colorimétrique à chaque fois.

### Exemple 14 : Préparation d'un article incorporant une couche de décor selon l'invention

Un disque en alliage d'aluminium est dégraissé et brossé de manière à éliminer des surfaces du disque les corps gras et les oxydes de surface.

La composition fluorée de couche de fond FFF est appliquée sur une des surfaces du disque par sérigraphie puis séchée.

La composition fluorée de couche de décor FFD1, préparée à partir de la composition pigmentaire PG16, est appliquée par tampographie sur une partie (empreinte circulaire de 50 mm de diamètre) de la surface du disque revêtue de la couche de fond. La couche de décor est ensuite séchée.

La composition fluorée de couche de surface FFS est ensuite appliquée par sérigraphie sur la surface du disque revêtue de la couche de fond et de la couche de décor puis séchée.

Le disque revêtu est étuvé à 415°C pendant 7 minutes pour obtenir un disque comprenant un revêtement antiadhésif fluoré multicouche. Le disque est ensuite embouti pour donner une calotte revêtue sur sa surface intérieure.

Le revêtement obtenu présente un décor de couleur vert clair à température ambiante (20°C) sur fond noir (correspondant à la couche de fond).

La calotte revêtue est chauffée jusqu'à 220°C : une variation progressive de la couleur du décor, de la couleur vert clair initiale à une couleur vert foncé, est observée pendant le chauffage, les propriétés colorimétriques du fond noir ne variant pas.

On laisse refroidir la calotte jusqu'à la température ambiante ; une variation progressive de la couleur du décor, de la couleur vert foncé à la couleur vert clair initiale, est observée pendant le refroidissement, les propriétés colorimétriques du fond noir ne variant pas.

On réalise 10 cycles successifs de chauffage et de refroidissement tels que décrits ci-dessus : le décor présente les mêmes variations de propriété colorimétrique à chaque fois.

### Exemple 15 : Préparation d'un article incorporant une couche de décor selon l'invention

Un disque en alliage d'aluminium est dégraissé et brossé de manière à éliminer des surfaces du disque les corps gras et les oxydes de surface.

La composition fluorée de couche de fond FFF est appliquée sur une des surfaces du disque par sérigraphie puis séchée.

La composition fluorée de couche de décor FFD2, préparée à partir de la composition pigmentaire PG18, est appliquée par sérigraphie sur la surface du disque revêtue de la couche de fond, pour donner un damier formé de motifs carrés de 4 mm de côté. La couche de décor est ensuite séchée.

La composition fluorée de couche de surface FFS est ensuite appliquée par sérigraphie sur la surface du disque revêtue de la couche de fond et de la couche de décor puis séchée.

Le disque revêtu est étuvé à 415°C pendant 7 minutes pour obtenir un disque comprenant un revêtement antiadhésif fluoré multicouche.

Le disque est ensuite embouti pour donner une calotte revêtue sur sa surface intérieure.

Le revêtement obtenu présente un décor de couleur verte à température ambiante (20°C) sur fond noir (correspondant à la couche de fond).

La calotte revêtue est chauffée jusqu'à 220°C : une variation progressive de la couleur du décor, de la couleur verte initiale à une couleur rouge, est observée pendant le chauffage, les propriétés colorimétriques du fond noir ne variant pas.

On laisse refroidir la calotte jusqu'à la température ambiante : une variation progressive de la couleur du décor, de la couleur rouge à la couleur verte initiale, est observée pendant le refroidissement, les propriétés colorimétriques du fond noir ne variant pas.

On réalise 10 cycles successifs de chauffage et de refroidissement tels que décrits ci-dessus : le décor présente les mêmes variations de propriété colorimétrique à chaque fois.

### Exemple 16 : Préparation d'un article incorporant une couche de décor selon l'invention

Une calotte en acier inoxydable est dégraissée et brossée de manière à éliminer des surfaces de la calotte les corps gras et les oxydes de surface.

La composition sol-gel de couche de décor SGD2, préparée à partir de la composition pigmentaire PG1, est appliquée par pistolétage sur la surface intérieure de la calotte.

La couche de décor est ensuite séchée et étuvée pendant 15 minutes à 280°C.

Le revêtement obtenu présente une couleur verte à température ambiante (20°C). La calotte revêtue est chauffée jusqu'à 220°C : une variation progressive de la couleur du revêtement, de la couleur verte initiale à une couleur rouge, est observée pendant la chauffe.
On laisse refroidir la calotte jusqu'à la température ambiante ; une variation progressive de la couleur du revêtement, de la couleur rouge à la couleur verte initiale, est observée pendant le refroidissement.
On réalise 10 cycles successifs de chauffe et de refroidissement tels que décrits ci-dessus ; le revêtement présente les mêmes variations de propriété colorimétrique à chaque fois.

### Exemple 17 : Préparation d'un article incorporant une couche de décor selon l'invention

Une calotte en aluminium est dégraissée et brossée de manière à éliminer des surfaces de la calotte les corps gras et les oxydes de surface.

La composition sol-gel de couche de fond SGF est appliquée sur la surface intérieure de la calotte par pistolétage puis séchée.

La composition sol-gel de couche de décor SGD1, préparée à partie de la composition pigmentaire PG19, est appliquée par tampographie sur une partie (empreinte circulaire de 50 mm de diamètre) de la surface du disque revêtue de la couche de fond.

La composition sol-gel de couche de surface SGS est ensuite appliquée par pistolétage sur la surface du disque revêtue de la couche de fond et de la couche de décor, puis séchée et enfin étuvée pendant 20 minutes à 280°C.

Le revêtement obtenu présente un décor de couleur verte à température ambiante (20°C) sur fond gris (correspondant à la couche de fond).

La calotte revêtue est chauffée jusqu'à 220°C : une variation progressive de la couleur du décor, de la couleur verte initiale à une couleur rouge, est observée pendant le chauffage, les propriétés colorimétriques du fond gris ne variant pas.

On laisse refroidir la calotte jusqu'à la température ambiante : une variation progressive de la couleur du décor, de la couleur rouge à la couleur verte initiale, est observée pendant le refroidissement, les propriétés colorimétriques du fond gris ne variant pas.

On réalise 10 cycles successifs de chauffage et de refroidissement tels que décrits ci-dessus : le décor présente les mêmes variations de propriété colorimétrique à chaque fois.

### Exemple 18 : Préparation d'un article incorporant une couche de décor selon l'art antérieur

Un disque en alliage d'aluminium est dégraissé et brossé de manière à éliminer des surfaces du disque les corps gras et les oxydes de surface.

La composition fluorée de couche de fond FFF est appliquée sur une des surfaces du disque par sérigraphie puis séchée.

Une composition de couche de décor est préparée en introduisant les composés indiqués ci-après dans un broyeur puis en les broyant et en les agitant.

| **composé** | **% massique** |
|---|---|
| Fe₂O₃ (hématite) | 10,94 |
| eau déminéralisée | 24,80 |
| monopropylène glycol | 64,26 |

La composition de couche de décor est appliquée par tampographie sur une partie (empreinte circulaire de 50 mm de diamètre) de la surface du disque revêtue de la couche de fond. La couche de décor est ensuite séchée.

La composition fluorée de couche de surface FFS est ensuite appliquée par sérigraphie sur la surface du disque revêtue de la couche de fond et de la couche de décor, puis séchée.

Le disque revêtu est étuvé à 415°C pendant 7 minutes pour obtenir un disque comprenant un revêtement antiadhésif fluoré multicouche.

Le disque est ensuite embouti pour donner une calotte revêtue sur sa surface intérieure.

Le revêtement obtenu présente un décor de couleur rouge brun à température ambiante (20°C) sur fond noir (correspondant à la couche de fond).

La calotte revêtue est chauffée jusqu'à 220°C : une variation progressive de la couleur du décor, de la couleur rouge brun initiale à une couleur rouge brun légèrement foncé, est observée pendant la chauffe, les propriétés colorimétriques du fond noir ne variant pas.

On laisse refroidir la calotte jusqu'à la température ambiante : une variation progressive de la couleur du décor, de la couleur rouge brun légèrement foncée à la couleur rouge brun initiale, est observée pendant le refroidissement, les propriétés colorimétriques du fond noir ne variant pas.

Sans couleur de référence, il n'est pas possible de visualiser que la température chaude est atteinte. Il est ainsi impossible de distinguer du premier coup d'oeil si la poêle est chaude ou froide, créant ainsi un problème de sécurité.

## Revendications

1. Revêtement antiadhésif (2) comprenant au moins une couche (20) de décor fonctionnel, **caractérisé en ce que** la couche de décor (20) comprend une composition pigmentaire présentant une variation réversible de propriétés optiques et/ou colorimétriques lorsque le revêtement (2) est soumis, en partie ou en totalité, à une variation de température entre une température froide et une température chaude, la température froide étant comprise entre 0°C et 40°C et la température chaude étant comprise entre 80°C et 400°C, et **en ce que** la composition pigmentaire comprend au moins un composé de formule (I) se présentant sous forme de particules :
(I) Y(₃₋ₓ)MₓFe(_{5-y})Q_{y}O₁₂
dans laquelle :
M est choisi dans le groupe constitué par les lanthanides, les métaux alcalins, les métaux alcalino-terreux et les métalloïdes au degré d'oxydation +3 ;
Q est choisi dans le groupe constitué par les lanthanides, les non-métaux au degré d'oxydation +4, les métaux au degré d'oxydation +3 ou +4, les métaux de transition au degré d'oxydation +2 ou +4, les métaux alcalino-terreux et les métaux alcalins ;
x est compris entre 0 et 0,3 ; et
y est compris entre 0 et 3.

2. Revêtement (2) selon la revendication 1, dans lequel :
M est choisi dans le groupe constitué par La, Ce, Ca, et Sr, ainsi que leurs combinaisons ; et
Q est choisi dans le groupe constitué par Si, Al, Ga, Ge, Ti, Cr, Ca, Sr et La, ainsi que leurs combinaisons.

3. Revêtement (2) selon l'une quelconque des revendications précédentes, dans lequel le composé de formule (I) possède une structure de type grenat.

4. Revêtement (2) selon l'une quelconque des revendications précédentes, dans lequel le composé de formule (I) est choisi parmi les composés suivants :
Y₃Fe₅O₁₂,
Y₃Fe_{4,75}Ga_{0,25}O₁₂
Y_{2,85}La_{0,15}Fe₅O₁₂,
Y_{2,75}Sr_{0,25}Fe_{4,75}Ge_{0,25}O₁₂,
Y_{2,9}Sr_{0,1}Fe_{4,9}Ge_{0,1}O₁₂,
Y_{2,75}Sr_{0,25}Fe_{4,75}Si_{0,25}O₁₂,
Y_{2,9}Sr_{0,1}Fe_{4,9}Si_{0,1}O₁₂,
Y_{2,9}Sr_{0,1}Fe_{4,9}Ti_{0,1}O₁₂,
Y_{2,85}Sr_{0,15}Fe_{4,85}Ti_{0,15}O₁₂,
Y_{2,75}Ca_{0,25}Fe_{4,75}G_{0,25}O₁₂,
Y_{2,75}Ca_{0,25}Fe_{4,75}Si_{0,25}O₁₂,
Y₃Fe₄,₅Al_{0,5}O₁₂,
Y₃Fe_{4,75}Al_{0,25}O₁₂,
Y₃Fe_{4,4}Al_{0,5}Cr_{0,1}O₁₂,
Y₃Fe_{4,65}Al_{0,25}Cr_{0,1}O₁₂,
Y₃Fe_{4,75}Ge_{0,25}O₁₂,
Y₃Fe_{4,75}Si_{0,25}O₁₂,
Y₃Fe_{4,85}Cr_{0,15}O₁₂,
Y₃Fe₃Al₂O₁₂,
Y₃Al₃Fe₂O₁₂.

5. Revêtement (2) selon l'une quelconque des revendications précédentes, dans lequel y est compris entre 0 et 0,5.

6. Revêtement (2) selon l'une quelconque des revendications précédentes, dans lequel la température chaude est comprise entre 120°C et 240°C.

7. Revêtement (2) selon l'une quelconque des revendications précédentes, dans lequel la couche de décor (20) est exempte de liant thermostable.

8. Revêtement (2) selon l'une quelconque des revendications 1 à 6, dans lequel la couche de décor (20) comprend, outre la composition pigmentaire, au moins un liant thermostable.

9. Revêtement (2) selon la revendication 8, dans lequel le liant thermostable est choisi dans le groupe constitué par les émaux, les résines fluorocarbonées, seules ou en mélange, les polymères inorganiques ou hybrides organiques-inorganiques synthétisés par voie sol-gel, les silicones, les silicone-polyesters, les polyimides, le polysulfure de phényle (PPS), le polysulfure d'éthylène (PES), les polyétheréthercétones (PEEK), les polyéthercétones (PEK), les polyamide-imides (PAI), les fluorosilicones, et les polybenzimidazoles (PBI), ainsi que leurs mélanges.

10. Revêtement (2) selon l'une quelconque des revendications précédentes, dans lequel la composition pigmentaire comprend en outre au moins un autre composé thermochrome.

11. Revêtement (2) selon la revendication 10, dans lequel la composition pigmentaire comprend en outre de l'oxyde de bismuth.

12. Article (1) **caractérisé en ce qu'**il comprend un support (3) présentant deux faces opposées (31, 32), dont l'une (31) au moins est recouverte d'un revêtement (2) tel que défini selon l'une quelconque des revendications 1 à 11.

13. Article (1) selon la revendication 12, **caractérisé en ce qu'**il constitue un article culinaire dans lequel le support (3) présente une face intérieure (31) concave destinée à être disposée du côté d'aliments susceptibles d'être introduits dans l'article (1), et une face extérieure (32) convexe destinée à être disposée vers une source de chaleur.

## Patentansprüche

1. Antihaftbeschichtung (2), umfassend mindestens eine funktionalen Dekorschicht (20), **dadurch gekennzeichnet, dass** die Dekorschicht (20) eine Pigmentzusammensetzung umfasst, die eine reversible Änderung der optischen und/oder kolorimetrischen Eigenschaften aufweist, wenn die Beschichtung (2) ganz oder teilweise einer Temperaturänderung zwischen einer kalten Temperatur und einer heißen Temperatur unterzogen wird, wobei die kalte Temperatur zwischen 0 °C und 40 °C liegt, und wobei die heiße Temperatur zwischen 80 °C und 400 °C liegt, und dass die Pigmentzusammensetzung mindestens eine Verbindung der Formel (I) umfasst, die unter der Form der Teilchen auftritt:
(I) Y₍₃₋ₓ₎MₓFe_{(5-y)}Q_{y}O₁₂
in der:
M aus der Gruppe ausgewählt ist, die aus Lanthaniden, Alkalimetallen, Erdalkalimetallen und Metalloiden mit dem Oxidationsgrad +3 besteht;
Q aus der Gruppe ausgewählt ist, die aus Lanthaniden, Nichtmetallen mit dem Oxidationsgrad +4, Metallen mit dem Oxidationsgrad +3 oder +4, Übergangsmetallen mit dem Oxidationsgrad +2 oder +4, Erdalkalimetallen und Alkalimetallen besteht;
x zwischen 0 und 0,3 liegt; und
y zwischen 0 und 3 liegt.

2. Beschichtung (2) nach Anspruch 1, wobei
M aus der Gruppe ausgewählt ist, die aus La, Ce, Ca und Sr, sowie deren Kombinationen besteht; und
Q aus der Gruppe ausgewählt ist, die aus Si, Al, Ga, Ge, Ti, Cr, Ca, Sr und La, sowie deren Kombinationen besteht.

3. Beschichtung (2) nach einem der vorhergehenden Ansprüche, wobei die Verbindung der Formel (I) eine granatartige Struktur aufweist.

4. Beschichtung (2) nach einem der vorhergehenden Ansprüche, wobei die Verbindung der Formel (I) aus den folgenden Verbindungen ausgewählt ist:
Y₃Fe₅O₁₂,
Y₃Fe_{4,75}Ga_{0,25}O₁₂,
Y_{2,85}La_{0,15}Fe₅O₁₂,
Y_{2,75}Sr_{0,25}Fe_{4,75}Ge_{0,25}O₁₂,
Y_{2,9}Sr_{0,1}Fe_{4,9}Ge_{0,1}O₁₂,
Y_{2,75}Sr_{0,25}Fe_{4,75}Si_{0,25}O₁₂,
Y_{2,9}Sr_{0,1}Fe_{4,9}Si_{0,1}O₁₂,
Y_{2,9}Sr_{0,1}Fe_{4,9}Ti_{0,1}O₁₂,
Y_{2,85}Sr_{0,15}Fe_{4,85}Ti_{0,15}O₁₂,
Y_{2,75}Ca_{0,25}Fe_{4,75}Ge_{0,25}O₁₂,
Y_{2,75}Ca_{0,25}Fe_{4,75}Si_{0,25}O₁₂,
Y₃Fe_{4,5}Al_{0,5}O₁₂,
Y₃Fe_{4,75}Al_{0,25}O₁₂,
Y₃Fe_{4,4}Al_{0,5}Cr_{0,1}O₁₂,
Y₃Fe_{4,65}Al_{0,25}Cr_{0,1}O₁₂,
Y₃Fe_{4,75}Ge_{0,25}O₁₂,
Y₃Fe_{4,75}Si_{0,25}O₁₂,
Y₃Fe_{4,85}Cr_{0,15}O₁₂,
Y₃Fe₃Al₂O₁₂,
Y₃Al₃Fe₂O₁₂.

5. Beschichtung (2) nach einem der vorhergehenden Ansprüche, wobei y zwischen 0 und 0,5 liegt.

6. Beschichtung (2) nach einem der vorhergehenden Ansprüche, wobei die heiße Temperatur zwischen 120 °C und 240 °C liegt.

7. Beschichtung (2) nach einem der vorhergehenden Ansprüche, wobei die Dekorschicht (20) frei von hitzebeständigem Bindemittel ist.

8. Beschichtung (2) nach einem der Ansprüche 1 bis 6, wobei die Dekorschicht (20) neben der Pigmentzusammensetzung mindestens ein hitzebeständiges Bindemittel umfasst.

9. Beschichtung (2) nach Anspruch 8, wobei das hitzebeständig Bindemittel aus der Gruppe ausgewählt ist, die aus Emaillen, Fluorkohlenstoffharzen, allein oder als Mischung, anorganischen oder hybriden organisch-anorganischen Polymeren, die durch ein Sol-Gel synthetisiert sind, Silikonen, Silikonpolyestern, Polyimiden, Polyphenylensulfid (PPS), Polyethylensulfid (PES), Polyetheretherketonen (PEEK), Polyetherketonen (PEK), Polyamidimiden (PAI), Fluorsilikonen und Polybenzimidazolen (PBI) sowie deren Mischungen besteht

10. Beschichtung (2) nach einem der vorhergehenden Ansprüche, wobei die Pigmentzusammensetzung ferner mindestens eine andere thermochrome Verbindung umfasst.

11. Beschichtung (2) nach Anspruch 10, wobei die Pigmentzusammensetzung ferner Bismutoxid umfasst.

12. Artikel (1), **dadurch gekennzeichnet, dass** er einen Träger (3) umfasst, der zwei gegenüberliegende Seiten (31, 32) aufweist, von denen mindestens eine (31) mit einer Beschichtung (2) bedeckt ist, wie sie in einem der Ansprüche 1 bis 11 definiert ist.

13. Artikel (1) nach Anspruch 12, **dadurch gekennzeichnet, dass** er einen Kochartikel darstellt, wobei der Träger (3) eine konkave Innenfläche (31), die dazu bestimmt ist, auf der Seite der Nahrungsmittel platziert zu werden, die geeignet sind, in den Artikel (1) eingeführt zu werden, und eine konvexe Außenfläche (32) aufweist, die dazu bestimmt ist, in Richtung einer Wärmequelle angeordnet zu werden.

## Claims

1. Non-stick coating (2) comprising at least one layer (20) of functional decoration, **characterized in that** the decorative layer (20) comprises a pigment composition having a reversible change of optical properties and/or colour when the coating (2) is subjected, in part or in whole, to a temperature variation between a cold temperature and a hot temperature, the cold temperature being between 0°C and 40°C and the hot temperature being between 80°C and 400°C, and **in that** the pigment composition comprises at least one compound of formula (I) in the form of particles:
(I) Y₍₃₋ₓ₎MₓFe_{(5-y)}Q_{y}O₁₂
wherein:
M is selected from the group consisting of lanthanides, alkali metals, alkaline earth metals and metalloids in oxidation state +3;
Q is selected from the group consisting of lanthanides, non-metals in the oxidation state +4, metals in the oxidation state +3 or +4, transition metals in the oxidation state +2 or +4, alkaline earth metals and alkali metals;
x is between 0 and 0.3; and
y is between 0 and 3.

2. A coating (2) according to claim 1, wherein:
M is selected from the group consisting of La, Ce, Ca, and Sr, and combinations thereof; and
Q is selected from the group consisting of Si, Al, Ga, Ge, Ti, Cr, Ca, Sr and La, and combinations thereof.

3. A coating (2) according to any preceding claim, wherein the compound of formula (I) has a garnet-type structure.

4. A coating (2) according to any preceding claim, wherein the compound of formula (I) is selected from the following compounds:
Y₃Fe₅O₁₂,
Y₃Fe_{4.75}Ga_{0.25}O₁₂,
Y_{2.85}La_{0.15}Fe₅O₁₂,
Y_{2.75}Sr_{0.25}Fe_{4.75}Ge_{0.25}O₁₂,
Y_{2.9}Sr_{0.1}Fe_{4.9}Ge_{0.1}O₁₂,
Y_{2.75}Sr_{0.25}Fe_{4.75}Si_{0.25}O₁₂,
Y_{2.9}Sr_{0.1}Fe_{4.9}Si_{0.1}O₁₂,
Y_{2.9}Sr_{0.1}Fe_{4.9}Ti_{0.1}O₁₂,
Y_{2.85}Sr_{0.15}Fe_{4.85}Ti_{0.15}O₁₂,
Y_{2.75}Ca_{0.25}Fe_{4.75}Ge_{0.25}O₁₂,
Y_{2.75}Ca_{0.25}Fe_{4.75}Si_{0.25}O₁₂,
Y₃Fe_{4.5}Al_{0.5}O₁₂,
Y₃Fe_{4.75}Al_{0.25}O₁₂,
Y₃Fe_{4.4}Al_{0.5}Cr_{0.1}O₁₂,
Y₃Fe_{4.65}Al_{0.25}Cr_{0.1}O₁₂,
Y₃Fe_{4.75}Ge_{0.25}O₁₂,
Y₃Fe_{4.75}Si_{0.25}O₁₂,
Y₃Fe_{4.85}Cr_{0.15}O₁₂,
Y₃Fe₃Al₂O₁₂,
Y₃Al₃Fe₂O₁₂.

5. A coating (2) according to any preceding claim, wherein y is between 0 and 0.5.

6. A coating (2) according to any preceding claim, wherein the hot temperature is between 120°C and 240°C.

7. A coating (2) according to any preceding claim, wherein the decorative layer (20) is free of heat-stable binder.

8. A coating (2) according to any one of claims 1 to 6, wherein the decorative layer (20) comprises, in addition to the pigment composition, at least one heat-stable binder.

9. A coating (2) according to claim 8, wherein the heat-stable binder is selected from the group consisting of enamels, fluorocarbon resins, alone or in admixture, inorganic or organic-inorganic hybrid polymers synthesized by a sol-gel process, silicones, silicone-polyesters, polyimides, polyphenylene sulfide (PPS), polyethylene sulfide (PES), polyether ether ketones (PEEK), polyether ketones (PEK), polyamide imides (PAI), fluoro silicones, and polybenzimidazoles (PBI), and admixtures thereof.

10. A coating (2) according to any preceding claim, wherein the pigment composition further comprises at least one further thermochromic compound.

11. A coating (2) according to claim 10, wherein the pigment composition further comprises bismuth oxide.

12. An object (1) **characterized in that** it comprises a support member (3) having two opposite surfaces (31, 32), one (31) at least is covered with a coating (2) as defined according to one of claims 1 to 11.

13. An object (1) according to claim 12, **characterized in that** it is a cooking utensil wherein the support member (3) has a concave inner surface (31) intended to be arranged on the side of foods to be introduced into the article (1) and a convex outer surface (32) intended to be arranged facing a heat source.
